# EUROPÄISCHE PATENTSCHRIFT

(11) **EP 2 373 716 B1**
(45) Veröffentlichungstag und Bekanntmachung des Hinweises auf die Patenterteilung: **31.07.2013**
(21) Anmeldenummer: 09760904.4
(22) Anmeldetag: 02.12.2009
(51) Int. Cl.: C08G 18/10, C09J 175/04, C08G 65/336, C08K 5/12, C09K 3/10

(54) **CYCLOHEXANPOLYCARBONSÄURE-DERIVATE ALS WEICHMACHER FÜR KLEB- UND DICHTSTOFFE**
CYCLOHEXANE POLYCARBOXYLIC ACID DERIVATIVES AS PLASTICIZERS FOR ADHESIVES AND SEALANTS
DÉRIVÉS DE L'ACIDE POLYCARBOXYLIQUE CYCLOHEXANE COMME PLASTIFIANTS DE MATÉRIAUX DE COLLAGE OU D'ÉTANCHÉITÉ

(30) Priorität: 05.12.2008 EP 08170809
(43) Veröffentlichungstag der Anmeldung: 12.10.2011
(73) Patentinhaber: BASF SE, 67056 Ludwigshafen (DE)
(72) Erfinder: MACK, Helmut, 83278 Traunstein (DE); AUSTERMANN, Tobias, 48153 Münster (DE); BREITSCHEIDEL, Boris, 67117 Limburgerhof (DE); WAGNER, Jochen, 66957 Ruppertsweiler (DE)
(86) Internationale Anmeldenummer: PCT/EP2009/066184
(87) Internationale Veröffentlichungsnummer: WO 2010/063740

(56) Entgegenhaltungen:
- WO-A1-2007/093381
- WO-A2-2005/123821
- DE-A1-102006 006 973
- US-B1- 6 310 170

## Beschreibung

Die vorliegende Erfindung betrifft Kleb- und Dichtstoffe auf Basis von silylierten Polymeren enthaltend Cyclohexan-1,2-dicarbonsäuredi(isononyl)ester, ein Verfahren zu deren Herstellung sowie deren Verwendung.

Kleb- und Dichtstoffe auf Basis von silylierten Polyurethanen, z.B. Bayer Desmoseal^{®}; silylierten Polyharnstoffen; silyl-terminierten Polyethern z.B. Kaneka MS-Polymer^{®}; α, ω- silyl-terminierten Acrylaten, bzw. Arcylat-Telechele, z.B. Kaneka X-MAP^{®} und silylierten Polysulfiden, z.B. Toray Silyl LP weisen ein sehr breites Anwendungsspektrum auf und werden in dem jeweiligen Einsatzzweck angepassten Formulierungen eingesetzt, beispielsweise im Hoch- und Tiefbau, in der Flugzeug- oder Fahrzeugindustrie und im Schiffbau. Eine wesentliche Komponente dieser Formulierung sind in der Regel Weichmacher, welche einen Anteil von über 40% der Gesamtformulierung ausmachen können. Bei Weichmachern handelt es sich gemäß DIN 55945 um flüssige und feste indifferente organische Substanzen mit geringem Dampfdruck. Aufgrund ihres Löse- und Quellvermögens verringern sie die Härte des Polymeren, kompatibilisieren das Füllstoff/Polymer-Gemisch und erhöhen die Tieftemperaturelastizität. Insbesondere dienen Weichmacher in Kleb- und Dichtstoffen auch zur Erhöhung der Dehnbarkeit des erzeugten Films.

Es ist bekannt, dass die Struktur der Alkoxysilane, welche zur weiteren Vernetzung an das Polymer gebunden sind, einen direkten Einfluss auf die mechanischen Eigenschaften des Polymers haben, wie etwa Härtungsgeschwindigkeit, Dehnbarkeit, Zugfestigkeit und Flexibilität. Typische Beispiele zum Einfluss der Struktur der endständigen Silangruppen an Polyurethanen auf die Eigenschaften des ausgehärteten Polymers werden in US 4,374,237 beschrieben.

US 6,310,170 offenbart Zusammensetzungen, welche silylierte Polymere, insbesondere auch silylierte Polyurethane und silylierte Polyether enthält. Als Haftvermittler werden der Zusammensetzung spezielle Silane zur Erhöhung der Haft- und Dehnfähigkeit des Systems zugesetzt, was insbesondere im Bereich der Kleb- und Dichtstoffe von großem Interesse ist. Weiterhin enthalten die Zusammensetzungen Weichmacher, wobei insbesondere Diisononylphthalat und Diisodecyiphthalat explizit genannt werden. Hierbei ist es allerdings von Nachteil, dass den Zusammensetzungen weitere relativ teure spezielle Silane zugesetzt werden müssen um die mechanischen Eigenschaften der silylierten Polymere zu verbessern.

WO 2007/093381 betrifft einkomponentige, lösungsmittelfreie Klebstoffe aus Silanterminierten Polymeren, insbesondere werden darin Silan-terminierte Polyoxyalkylene und Polyalkylacrylate oder Polyalkylmethacrylate erwähnt. Als Weichmacher werden generisch Phthalsäureester, Cyclohexandicarbonsäureester und Polypropylenoxid genannt. In den Beispielen wird Diisodecylphthalat als Weichmacher eingesetzt.

Da mit den genannten Verbindungen bzw. Verfahren das grundlegende Problem der Optimierung der mechanischen Eigenschaften von silylierten Polymeren noch immer nicht, vor allem unter wirtschaftlichen Gesichtspunkten endgültig gelöst ist, lag der vorliegenden Erfindung die Aufgabe zugrunde, weitere kostengünstige Formulierungen auf Basis von silylierten Polymeren zu entwickeln, welche verbesserte mechanische Eigenschaften, insbesondere eine erhöhte Dehnbarkeit bei gleichzeitig hoher Reaktivität und guten Haftungseigenschaften aufweisen.

Erfindungsgemäß gelöst wurde die Aufgabe durch Kleb- oder Dichtstoffe enthaltend mindestens (A) eine Verbindung ausgewählt aus der Gruppe der silylierten Polyurethane, silylierten Polyharnstoffe, silylierten Polyether, silylierten Polysulfide und silyl-terminierten Acrylate und mindestens (B) einen Cyclohexan-1,2-dicarbonsäure-di(isononyl)ester. Überraschend wurde gefunden, dass diese Zusammensetzung im Vergleich zum Stand der Technik eine erhöhte Dehnbarkeit aufweist, ohne die weiteren anwendungstechnischen Eigenschaften negativ zu beeinflussen.

Die vorliegende Erfindung betrifft somit einen Kleb- oder Dichtstoff enthaltend mindestens
(A) eine Verbindung ausgewählt aus der Gruppe der silylierten Polyurethane, silylierten Polyharnstoffe, silylierten Polyether, silylierten Polysulfide und silyl-terminierten Acrylate und mindestens
(B) einen Cyclohexan-1,2-dicarbonsäuredi(isononyl)ester,
ein Verfahren zur Herstellung dieser Kleb- und Dichtstoffe, sowie deren Verwendung.

Bei den erfindungsgemäß verwendeten Cyclohexanpolycarbonsäure-Derivaten handelt es sich um Diisononylester der Cyclohexan-1,2-dicarbonsäure. Bevorzugt liegen alle Carbonsäuregruppen in veresterter Form vor.

Bevorzugt ist das mindestens eine Cyclohexanpolycarbonsäurederivat ausgewählt aus der Gruppe bestehend aus kernhydrierten Diisononylestern der Phthalsäure, wobei die Isononylgruppen linear oder verzweigt sein können.

Besonders bevorzugt ist Cyclohexan-1,2-dicarbonsäurediisononylester.

Im Sinne der vorliegenden Erfindung geeignet sind die in der WO 99/32427 offenbarten, im Folgenden nochmals aufgelisteten Cyclohexan-1,2-dicarbonsäureester: Cyclohexan-1,2-dicarbonsäuredi(isononyl)ester, erhältlich durch Hydrierung eines Di(isononyl)phthalats mit der CAS Nr. 68515-48-0;

Cyclohexan-1,2-dicarbonsäuredi(isononyl)ester, erhältlich durch Hydrierung eines Di(isononyl)phthalats mit der CAS Nr. 28553-12-0, basierend auf n-Buten;

Cyclohexan-1,2-dicarbonsäuredi(isononyl)ester, erhältlich durch Hydrierung eines Di(isononyl)phthalats mit der CAS Nr. 28553-12-0 basierend auf Isobuten.

WO 99/32427 bezieht sich u.a. auf diese vorstehend aufgelisteten Verbindungen und die Herstellung von Cyclohexanpolycarbonsäuren unter Verwendung spezieller Makroporen aufweisender Katalysatoren.

Des weiteren sind auch die Hydrierungsprodukte der kommerziell erhältlichen Benzolcarbonsäureester mit den Handelsnamen Jayflex DINP (CAS Nr. 68515-48-0), Vestinol 9 (CAS Nr. 28553-12-0), Palatinol N (CAS Nr. 28553-12-0), als geeignet im Sinne der vorliegenden Erfindung zu bewerten.

Besonders bevorzugte Kleb- und Dichtstoffe umfassen Dialkylester der 1,2-Cyclohexandicarbonsäure. Als Estergruppe R ganz besonders bevorzugt sind Alkylgruppen mit 9 C-Atomen.

Die erfindungsgemäßen Cyclohexan-1,2-di-carbonsäure-Derivate zeichnen sich gegenüber denen aus dem Stand der Technik bekannten Weichmachern für Kleb- und Dichtstoffe durch vergleichbare oder bessere anwendungstechnische Eigenschaften aus. So besitzen die hergestellten Kleb- und Dichtstoffe insbesondere eine bessere Dehnbarkeit. Hierdurch eignen sich die erfindungsgemäßen Kleb- und Dichtstoffe für eine Vielzahl von Anwendungen, welche eine schnelle Aushärtung erfordern und hohe Anforderungen an die Dehnbarkeit stellen, bei gleichzeitig hohen Anforderungen an Zugfestigkeit und Haftungseigenschaften.

Die Herstellung der Cyclohexan-1,2-di-carbonsäurediisononylester erfolgt bevorzugt gemäß dem in WO 99/32427 offenbarten Verfahren. Dieses Verfahren umfasst die Hydrierung einer Benzolpolycarbonsäure oder eines Derivats davon oder eines Gemisches aus zwei oder mehr davon durch Inkontaktbringen der Benzolpolycarbonsäure oder des Derivats davon oder des Gemischs aus zwei oder mehr davon mit einem Wasserstoff enthaltenden Gas in Gegenwart eines Katalysators der als Aktivmetall mindestens ein Metall der VIII. Nebengruppe des Periodensystems allein oder zusammen mit mindestens einem Metall der I. oder VII. Nebengruppe des Periodensystems, aufgebracht auf einem Träger, umfasst, wobei der Träger Makroporen aufweist.

In einer bevorzugten Ausführungsform weist der Träger einen mittleren Porendurchmesser von mindestens 50 nm und eine BET-Oberfläche von höchstens 30 m²/g auf und die Menge des Aktivmetalls beträgt 0,01 bis 30 Gew.-%, bezogen auf das Gesamtgewicht des Katalysators.

In einer weiteren Ausführungsform wird ein Katalysator eingesetzt, worin die Menge des Aktivmetalls 0,01 bis 30 Gew.-%, bezogen auf das Gesamtgewicht des Katalysators, beträgt und 10 bis 50% des Porenvolumens des Trägers von Makroporen mit einem Porendurchmesser im Bereich von 50 nm bis 10.000 nm und 50 bis 90% des Porenvolumens des Trägers von Mesoporen mit einem Porendurchmesser im Bereich von 2 bis 50 nm gebildet werden, wobei sich die Summe der Anteile der Porenvolumina zu 100% addiert.

In einer weiteren Ausführungsform weist der Katalysator 0,01 bis 30 Gew.-%, bezogen auf das Gesamtgewicht des Katalysators, eines Aktivmetalls auf, aufgebracht auf einem Träger, wobei der Träger einen mittleren Porendurchmesser von mindestens 0,1 µm und eine BET-Oberifläche von höchstens 15 m²/g aufweist. Als Träger können prinzipiell alle Träger eingesetzt werden, die Makroporen aufweisen, d.h. Träger, die ausschließlich Makroporen aufweisen, sowie solche, die neben Makroporen auch Meso- und/oder Mikroporen enthalten.

Als Aktivmetall können prinzipiell alle Metalle der VIII. Nebengruppe des Periodensystems eingesetzt werden. Bevorzugt werden als Aktivmetalle Platin, Rhodium, Palladium, Cobalt, Nickel oder Ruthenium oder ein Gemisch aus zwei oder mehr davon eingesetzt, wobei insbesondere Ruthenium als Aktivmetall verwendet wird. Unter den ebenfalls verwendbaren Metallen der I. oder VII. oder aber der I. und der VII. Nebengruppe des Periodensystems, die ebenfalls allesamt prinzipiell verwendbar sind, werden vorzugsweise Kupfer und/oder Rhenium eingesetzt.

Die Begriffe Makroporen" und Mesoporen" werden im Rahmen der vorliegenden Anmeldung so verwendet, wie sie in Pure Appl. Chem., 45 S. 79 (1976) definiert sind, nämlich als Poren, deren Durchmesser oberhalb von 50 nm (Makroporen) oder deren Durchmesser zwischen 2 nm und 50 nm liegt (Mesoporen).

Der Gehalt des Aktivmetalls beträgt im allgemeinen 0,01 bis 30 Gew.-%, bevorzugt 0,01 bis 5 Gew.-%, besonders bevorzugt 0,1 bis 5 Gew.%, jeweils bezogen auf das Gesamtgewicht des verwendeten Katalysators.

Der verwendete Begriff "Benzolpolycarbonsäure oder eines Derivats davon" umfasst Phthalsäure und Derivate davon, wobei insbesondere Diester, insbesondere Alkylester zu nennen sind. Bevorzugt sind die Isononylester der genannten Säure.

Die bevorzugt eingesetzten Benzolpolycarbonsäurealkylester werden im Allgemeinen durch Umsetzung von Benzolpolycarbonsäuren mit den den Alkylgruppen der Ester entsprechenden Alkoholen hergestellt. Geeignete Reaktionsbedingungen zur Umsetzung der Benzolpolycarbonsäure mit den entsprechenden Alkoholen sind dem Fachmann bekannt.

Bevorzugt eingesetzte Benzolpolycarbonsäure ist Phthalsäure. Die vorstehend genannte Säure ist kommerziell erhältlich.

C₉-Alkohole bzw. Mischungen enthaltend C₉-Alkohole werden bevorzugt durch Dimerisierung von Butenen, Hydroformylierung der erhaltenen Octene und anschließende Hydrierung des erhaltenen C₉-Aldehyds hergestellt.

Geeignete Verfahren und C₉-Alkohole enthaltende Mischungen sind zum Beispiel in WO 92/13818, DE-A 20 09 505, DE-A 199 24 339, EP-A 1 113 034, WO 2000/63151, WO 99/25668, JP-A 1 160 928, JP-A 03 083 935, JP-A 2000/053803, EP-A 0 278 407 und EP-A 1 178 029 offenbart.

Besonders bevorzugt werden in den Hilfsmitteln oder als Hilfsmittel gemäß der vorliegenden Anmeldung Diisononylester der vorstehend genannten Cyclohexandicarbonsäure, insbesondere 1,2-Diisononylester eingesetzt. Weiterhin ist es möglich, dass die Alkylgruppen der Cyclohexandicarbonsäureisononylester zwar die gleiche Kohlenstoffatomanzahl aufweisen, jedoch geradkettig sind oder unterschiedliche Verzweigungen aufweisen und somit Isomerengemische bilden. Der Anteil der verschiedenen Isomeren der Alkylgruppen ergibt sich im Allgemeinen aus der Zusammensetzung der Alkohole, die zur Veresterung der Benzoldicarbonsäure eingesetzt werden, die nach Veresterung zu den Cyclohexandicarbonsäureestern hydriert werden. Geeignete Alkoholmischungen sind vorstehend bereits genannt. Im Sinne der vorliegenden Anmeldung sind somit unter geradkettigen oder verzweigten Alkylresten mit einer bestimmten Anzahl von Kohlenstoffatomen neben den jeweils einzelnen Isomeren Isomerengemische zu verstehen, deren Zusammensetzung sich - wie vorstehend erwähnt - aus der Zusammensetzung der zur Veresterung der Benzoldicarbonsäure eingesetzten Alkohole ergibt.

Ganz besonders bevorzugt werden C9-Alkoholgemische mit einem ISO-Index vom 1 bis 1,5, insbesondere Nonanolgemische mit einem ISO-Index von 1,25 bzw. 1,6 eingesetzt.

Der ISO-Index ist eine dimensionslose Größe, die mittels Gaschromatographie bestimmt wurde.

| | | |
|---|---|---|
| Methode: | Kapillar GC | |
| Apparatur: | Kapillar Gaschromatograph mit Autosampler, Split/Splitless-Injektionssystem und Flammenionisationsdetektor (FID) | |
| Chemikalien: | - MSTFA (N-Methyl-N-trimethylsilyltrifluoracetamid) - Vergleiche zur Bestimmung der Retentionszeiten | |
| Probenvorbereitung: | 3 Tropfen der Probe werden in 1 ml MSTFA und für 60 Minuten bei 80 °C gehalten | |
| GC Bedingungen: | Kapillarsäule: | Ultra-1 |
| | - Länge: | 50 m |
| | - Innendurchmesser: | 0,25 mm |
| | - Filmdicke: | 0,1 Mikrometer |
| | Trägergas: | Helium |
| | Säulenvordruck: | 200 psi constant |
| | Split: | 80 ml/min |
| | Septumspülung: | 3 ml/min |
| | Ofentemperatur: | 120 °C, 25 min isotherm |
| | Injektortemperatur: | 250 °C |
| | Detektortemperatur: | 250 °C (FID) |
| | Injektionsvolumen: | 0,5 Mikroliter |
| | | |
| Berechnung | Die Vorgehensweise bei der Berechnung des Isoindex wird in der folgenden Tabelle ersichtlich: | |

| Komponente | Name | Verzweigung | Anteil in FI.% | Index |
|---|---|---|---|---|
| 1 | 2-Ethyl-2-methylhexanol-1 | 2 | 1,00 | 0,0200 |
| 2 | 2-Ethyl-4-methylhexanol-1 | 2 | 1,00 | 0,0200 |
| 3 | 2-Ethyl-4-methylhexanol-1 | 2 | 1,00 | 0,0200 |
| 4 | 2-Propyl-3-methylpentanol-1 | 2 | 1,00 | 0,0200 |
| 5 | 2-Propyl-hexanol-1 | 1 | 1,00 | 0,0100 |
| 6 | 2,5-Dimethylheptanol-1 | 2 | 1,00 | 0,0200 |
| 7 | 2,3-Dimethylheptanol-1 | 2 | 1,00 | 0,0200 |
| 8 | 2,3,4-Trimethylhexanol-1 | 3 | 1,00 | 0,0300 |
| 9 | 2-Ethylheptanol-1 | 1 | 1,00 | 0,0100 |
| 10 | 3-Ethyl-4-methylhexanol-1 | 2 | 82,00 | 1,6400 |
| 11 | 3-Ethylheptanol-1 | 1 | 1,00 | 0,0100 |
| 12 | 2-Methyloktanol-1 | 1 | 1,00 | 0,0100 |
| 13 | 4,5-Dimethylheptanol-1 | 2 | 1,00 | 0,0200 |
| 14 | 4,5-Dimethylheptanol-1 | 2 | 1,00 | 0,0200 |
| 15 | 4-Methyloktanol-1 | 1 | 1,00 | 0,0100 |
| 15a | 7-Methyloktanol-1 | 1 | 1,00 | 0,0000 |
| 16 | 6-Methyloktanol-1 | 1 | 1,00 | 0,0100 |
| 17 | Nonanol-1 | 0 | 1,00 | 0,0000 |
| | | Summe: | 99,00 | 1,9000 |
| | Unbekannte Komponente | 2 | 1,00 | 0,0200 |
| | | | Isoindex: | 1,9200 |

Zur Herstellung von Cyclohexan-1,2-di-carbonsäureestern, worin R 9 ist, wird besonders bevorzugt ein Nonanol-Gemisch eingesetzt, worin 0 bis 20 Gew.-%, bevorzugt 0,5 bis 18 Gew.-%, besonders bevorzugt 6 bis 16 Gew.-% des Nonanol-Gemisches keine Verzweigung aufweisen, 5 bis 90 Gew.-%, bevorzugt 10 bis 80 Gew.-%, besonders bevorzugt 45 bis 75 Gew.-%, eine Verzweigung, 5 bis 70 Gew.-%, bevorzugt 10 bis 60 Gew.-%, besonders bevorzugt 15 bis 35 Gew.-% zwei Verzweigungen, 0 bis 10 Gew.-%, bevorzugt 0 bis 8 Gew.-%, besonders bevorzugt 0 bis 4 Gew.-% drei Verzweigungen aufweisen und 0 bis 40 Gew.-%, bevorzugt 0,1 bis 30 Gew.-%, besonders bevorzugt 0,5 bis 6,5 Gew.-%. sonstige Komponenten sind. Unter sonstigen Komponenten sind im Allgemeinen Nonanole mit mehr als drei Verzweigungen, Decanole oder Octanole zu verstehen, wobei die Summe der genannten Komponenten 100 Gew.-% ergibt.

Eine besonders bevorzugte Ausführungsform eines Isononanol-Gemisches, das zur Herstellung von erfindungsgemäß bevorzugt verwendeten Cyclohexandicarbonsäurediisononylester eingesetzt werden kann, weist die folgende Zusammensetzung auf:
- 1,73 bis 3,73 Gew.-%, bevorzugt 1,93 bis 3,53 Gew.-%, besonders bevorzugt 2,23 bis 3,23 Gew.-% 3-Ethyl-6-methyl-hexanol;
- 0,38 bis 1,38 Gew.-%, bevorzugt 0,48 bis 1,28 Gew.-%, besonders bevorzugt 0,58 bis 1,18 Gew.-% 2,6 Dimethylheptanol;
- 2,78 bis 4,78 Gew.-%, bevorzugt 2,98 bis 4,58 Gew.-%, besonders bevorzugt 3,28 bis 4,28 Gew.-% 3,5-Dimethylheptanol;
- 6,30 bis 16,30 Gew.-%. bevorzugt 7,30 bis 15,30 Gew.-%, besonders bevorzugt 8,30 bis 14,30 Gew.-% 3,6-Dimethylheptanol;
- 5,74 bis 11,74 Gew.-%, bevorzugt 6,24 bis 11,24 Gew.-%, besonders bevorzugt 6,74 bis 10,74 Gew.-% 4,6-Dimethylheptanol;
- 1,64 bis 3,64 Gew.-%, bevorzugt 1,84 bis 3,44 Gew.-%, besonders bevorzugt 2,14 bis 3,14 Gew.-% 3,4,5-Trimethylhexanol;
- 1,47 bis 5,47 Gew.-%, bevorzugt 1,97 bis 4,97 Gew.-%, besonders bevorzugt 2,47 bis 4,47 Gew.-% 3,4,5-Trimethylhexanol, 3-Methyl-4-ethylhexanol und 3-Ethyl-4-methylhexanol;
- 4,00 bis 10,00 Gew.-%, bevorzugt 4,50 bis 9,50 Gew.-%, besonders bevorzugt 5,00 bis 9,00 Gew.-% 3,4-Dimethylheptanol;
- 0,99 bis 2,99 Gew.-%, bevorzugt 1,19 bis 2,79 Gew.-%, besonders bevorzugt 1,49 bis 2,49 Gew.-% 4-Ethyl-5-methylhexanol und 3-Ethylheptanol;
- 2,45 bis 8,45 Gew.-%, bevorzugt 2,95 bis 7,95 Gew.-%, besonders bevorzugt 3,45 bis 7,45 Gew.-% 4,5-Dimethylheptanol und 3-Methyloctanol;
- 1,21 bis 5,21 Gew.-%, bevorzugt 1,71 bis 4,71 Gew.-%, besonders bevorzugt 2,21 bis 4,21 Gew.-% 4,5-Dimethylheptanol;
- 1,55 bis 5,55 Gew.-%, bevorzugt 2,05 bis 5,05 Gew.-%, besonders bevorzugt 2,55 bis 4,55 Gew.-% 5,6-Dimethylheptanol;
- 1,63 bis 3,63 Gew.-%, bevorzugt 1,83 bis 3,43 Gew.-%, besonders bevorzugt 2,13 bis 3,13 Gew.-% 4-Methyloctanol;
- 0,98 bis 2,98 Gew.-%, bevorzugt 1,18 bis 2,78 Gew.-%, besonders bevorzugt 1,48 bis 2,48 Gew.-% 5-Methyloctaonol;
- 0,70 bis 2,70 Gew.-%, bevorzugt 0,90 bis 2,50 Gew.-%, besonders bevorzugt 1,20 bis 2,20 Gew.-% 3,6,6-Trimethylhexanol;
- 1,96 bis 3,96 Gew.-%, bevorzugt 2,16 bis 3,76 Gew.-%, besonders bevorzugt 2,46 bis 3,46 Gew.-% 7-Methyloctanol;
- 1,24 bis 3,24 Gew.-%, bevorzugt 1,44 bis 3,04 Gew.-%, besonders bevorzugt 1,74 bis 2,74 Gew.-% 6-Methyloctanol;
- 0,1 bis 3 Gew.-%, bevorzugt 0,2 bis 2 Gew.-%, besonders bevorzugt 0,3 bis 1 Gew.-% n-Nonanol;
- 25 bis 35 Gew.-%, bevorzugt 28 bis 33 Gew.-%, besonders bevorzugt 29 bis 32 Gew.-% sonstige Alkohole mit 9 und 10 Kohlenstoffatomen; wobei die Gesamtsumme der genannten Komponenten 100 Gew.-% ergibt.

Ein solches Isononanolgemisch liegt verestert mit Phthalsäure im Diisononylphthalat der CAS Nr. 68515-48-0 vor, aus dem der Cyclohexan-1,2-dicarbonsäurediisononylester mit entsprechender Isononylkomponente durch Hydrierung des aromatischen Kerns erzeugt werden kann. Solche Isononanolgemische können über den Weg der Zeolith-katalysierte Oligomerisierung von C₂-, C₃- und C₄-Olefingemischen, dem sogenannten Polygas-Prozess, Gewinnung einer C₈-Fraktion aus dem Oligomerisat und deren anschließende Hydroformylierung und Hydrierung erhalten werden.

Eine besonders bevorzugte Ausführungsform eines Isononanol-Gemisches, das zur Herstellung von erfindungsgemäß besonders bevorzugt verwendeten Cyclohexan-1,2-dicarbonsäurediisononylester eingesetzt werden kann, weist die folgende Zusammensetzung auf:
- 6,0 bis 16,0 Gew.-%, bevorzugt 7,0 bis 15,0 Gew.-%, besonders bevorzugt 8,0 bis 14,0 Gew.-% n-Nonanol;
- 12,8 bis 28,8 Gew.-%, bevorzugt 14,8 bis 26,8 Gew.-%, besonders bevorzugt 15,8 bis 25,8 Gew.-% 6-Methyloctanol;
- 12,5 bis 28,8 Gew.-%, bevorzugt 14,5 bis 26,5 Gew.-%, besonders bevorzugt 15,5 bis 25,5 Gew.-% 4-Methyloctanol;
- 3,3 bis 7,3 Gew.-%, bevorzugt 3,8 bis 6,8 Gew.-%, besonders bevorzugt 4,3 bis 6,3 Gew.-% 2-Methyloctanol;
- 5,7 bis 11,7 Gew.-%, bevorzugt 6,3 bis 11,3 Gew.-%, besonders bevorzugt 6,7 bis 10,7 Gew.-% 3-Ethylheptanol;
- 1,9 bis 3,9 Gew.-%, bevorzugt 2,1 bis 3,7 Gew.-%, besonders bevorzugt 2,4 bis 3,4 Gew.-% 2-Ethylheptanol;
- 1,7 bis 3,7 Gew.-%, bevorzugt 1,9 bis 3,5 Gew.-%, besonders bevorzugt 2,2 bis 3,2 Gew.-% 2-Propylhexanol;
- 3,2 bis 9,2 Gew.-%, bevorzugt 3,7 bis 8,7 Gew.-%, besonders bevorzugt 4,2 bis 8,2 Gew.-% 3,5-Dimethylheptanol;
- 6,0 bis 16,0 Gew.-%, bevorzugt 7,0 bis 15,0 Gew.-%, besonders bevorzugt 8,0 bis 14,0 Gew.-% 2,5-Dimethylheptanol;
- 1,8 bis 3,8 Gew.-%, bevorzugt 2,0 bis 3,6 Gew.-%, besonders bevorzugt 2,3 bis 3,3 Gew.-% 2,3-Dimethylheptanol;
- 0,6 bis 2,6 Gew.-%, bevorzugt 0,8 bis 2,4 Gew.-%, besonders bevorzugt 1,1 bis 2,1 Gew.-% 3-Ethyl-4-methylhexanol;
- 2,0 bis 4,0 Gew.-%, bevorzugt 2,2 bis 3,8 Gew.-%, besonders bevorzugt 2,5 bis 3,5 Gew.-% 2-Ethyl-4-methylhexanol;
- 0,5 bis 6,5 Gew.-%, bevorzugt 1,5 bis 6 Gew.-%, besonders bevorzugt 1,5 bis 5,5 Gew.-% sonstige Alkohole mit 9 Kohlenstoffatomen;
wobei die Gesamtsumme der genannten Komponenten 100 Gew.-% ergibt.

Ein solches Isononanolgemisch liegt verestert mit Phthalsäure im Diisononylphthalat der CAS Nr. 28553-12-0 vor, aus dem der Cyclohexan-1,2-dicarbonsäurediisononylester mit entsprechender Isononylkomponente durch Hydrierung des aromatischen Kerns, beispielsweise nach dem Verfahren der WO 99/32427, erzeugt werden kann. Solche Isononanolgemische können über den Weg der Dimerisierung von vorwiegend n-Butenen zu Octengemischen mittels Nickel-haltigen Katalysatoren, beispielsweise nach dem Verfahren der WO 95/14647, anschließende Hydroformylierung des erhaltenen Octengemisches, vorzugsweise Kobalt-katalysierte Hydroformylierung, und Hydrierung erhalten werden. Ein auf diesem Weg hergestellter Cyclohexan-1,2-dicarbonsäurediisononylester ist unter der Bezeichnung Hexamoll^{®} DINCH auf dem Markt.

Die als Komponente (A) eingesetzten silylierten Polyurethane, silylierten Polyharnstoffe, silylierten Polyether, silylierten Polysulfide und silyl-terminierten Acrylate sind dem Fachmann bekannt, wobei sich praktisch alle nach dem Stand der Technik bekannten Polymere dieser Klassen hinsichtlich der vorliegenden Erfindung eignen.

Die silylierten Polyurethane und silylierten Polyharnstoffe sind aus mindestens einer Polyol- bzw. Polyamin-Komponente, aus mindestens einer PolyisocyanatKomponente und aus mindestens einer Silylierungsmittel-Komponente aufgebaut.

In einer bevorzugten Ausführungsform der Erfindung beträgt das molare Verhältnis der im Polymer enthaltenen Isocyanat-Komponente zu der Summe der Polyol- bzw. Polyamin-Komponente 0,01 bis 50, bevorzugt 0,5 bis 1,8. Es ist weiterhin als bevorzugt anzusehen, dass mindestens 30%, insbesondere mindestens 80 %, besonders bevorzugt mindestens 95% der reaktiven Endgruppen im Polyurethan- bzw. Polyharnstoff-Polymer mit dem Silylierungsmittel umgesetzt wurden.

Bei der Isocyanat-Komponente handelt es sich bevorzugt um eine aliphatische, cycloaliphatische, araliphatische und/oder aromatische Verbindung, bevorzugt um ein Diisocyanat oder Triisocyanat, wobei es sich auch um Mischungen dieser Verbindungen handeln kann. Hierbei ist es als bevorzugt anzusehen, dass es sich um Hexamethylendiisocyanat-1,6 (HDI), HDI Dimer, HDI Trimer, 1-Isocyanato-3,3,5-trimethyl-5-isocyanatomethylcyclohexan (IPDI), 2,4- und/oder 2,6-Toluylendiisocyanat (TDI) und/oder 4,4'-, 2,4'- und/oder 2,2'-Diphenylmethandiisocyanat (MDI), Polymeres MDI, Carbodiimid-modifiziertes 4,4'-MDI, m-Xylendiisocyanat (MXDI), m- oder p-Tetramethylxylendiisocyanat (m-TMXDI, p-TMXDI), 4,4'-Dicyclohexylmethandiisocyanat (H12MDI), Naphthalin-1,5-Diisocyanat, Cyclohexan-1,4-diisocyanat, hydriertes Xylylen-diisocyanat (H6XDI), 1-Methyl-2,4-diisocyanatocyclohexan, Tetramethoxybutan-1,4-diisocyanat, Butan-1,4-diisocyanat, 1,6-Di-isocyanato-2,2,4-trimethylhexan, 1,6-Diisocyanato-2,4,4-trimethylhexan, 1-Iso-cyanato-1-methyl-4(3)-isocyanatomethylcyclohexan (IMCl) sowie 1,12-Dodecandiisocyanat (C12DI) handelt.

Bei der Polyol- bzw. Polyamin-Komponente handelt es sich bevorzugt um Polyetheresterpolyol, Polyetherpolyole, Polyesterpolyole, Polybutadienepolyole und Polycarbonatpolyole, wobei es sich auch um Mischungen dieser Verbindungen handeln kann. Die Polyole und/oder Polyamine enthalten bevorzugt zwischen zwei und 10, besonders bevorzugt zwischen zwei und drei Hydroxylgruppen und/oder Aminogruppen und besitzen ein gewichtsmittleres Molekulargewicht zwischen 32 und 30000, besonders bevorzugt zwischen 90 und 18000 g/mol. Als Polyole eignen sich vorzugsweise die bei Raumtemperatur flüssigen, glasartig fest/amorphen oder kristallinen Polyhydroxyverbindungen. Als typische Beispiele wären difunktionelle Polypropylenglykole zu nennen. Es können auch Hydroxylgruppen aufweisende statistische Copolymere und/oder Blockcopolymere des Ethylenoxids und Propylenoxids eingesetzt werden. Geeignete Polyetherpolyole sind die in der Polyurethanchemie an sich bekannten Polyether, wie die unter Verwendung von Startermolekülen hergestellten Polyole mittels KOH- oder DMC- Katalyse aus Styroloxid, Ethylenoxid, Propylenoxid, Butylenoxid, Tetrahydrofuran oder Epichlorhydrin.

Konkret eignen sich insbesondere auch Poly(oxytetramethylen)glykol (Poly-THF), 1,2-Polybutylenglykol, oder deren Mischungen. Insbesondere geeignet sind Polypropylenoxid, Polyethylenoxid und Butylenoxid und deren Mischungen. Ein weiterer als Polyolkomponente einsetzbarer Copolymertyp, der endständig Hydroxylgruppen aufweist, ist gemäß der allgemeinen Formel (herstellbar z.B. mittels "Controlled" High-Speed Anionic Polymerization gemäß Macromolecules 2004, 37, 4038-4043): 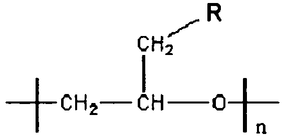 in welcher R gleich oder verschieden ist und bevorzugt durch OMe, OiPr, Cl oder Br repräsentiert wird.

Weiterhin eignen sich als Polyol-Komponente insbesondere die bei 25°C flüssigen, glasartig amorphen oder kristallinen Polyesterdi- bzw. polyole, die durch Kondensation von Di- oder Tricarbonsäuren, wie Adipinsäure, Sebacinsäure, Glutarsäure, Azelainsäure, Korksäure, Undecandisäure, Dodecandisäure, 3,3-Dimethylglutarsäure, Terephthalsäure, Isophthalsäure, Hexahydrophthalsäure und/oder Dimerfettsäure, mit niedermolekularen Diolen, Triolen oder Polyolen, wie Ethylenglykol, Propylenglykol, Diethylenglykol, Triethylenglykol, Dipropylenglykol, 1,4-Butandiol, 1,6-Hexandiol, 1,8-Octandiol, 1,10-Decandiol, 1,12-Dodecandiol, Dimerfettalkohol, Glycerin, Pentaerythritol und/ oder Trimethylolpropan, herstellbar sind.

Eine weitere geeignete Gruppe der Polyole sind die Polyester z.B. auf der Basis von Caprolacton, welche auch als "Polycaprolactone" bezeichnet werden. Weitere einsetzbare Polyole sind Polycarbonat-Polyole und Dimerdiole sowie Polyole auf Basis pflanzlicher Öle und ihrer Derivate, wie Rizinusöl und dessen Derivate oder epoxidiertes Sojabohnenöl. Außerdem kommen Hydroxylgruppen aufweisende Polycarbonate in Frage, welche durch Reaktion von Kohlensäurederivaten, z. B. Diphenylcarbonat, Dimethylcarbonat oder Phosgen, mit Diolen erhältlich sind. Besonders eignen sich z.B. Ethylenglykol, 1,2- und 1,3-Propandiol, 1,3- und 1,4-Butandiol, 1,6-Hexandiol, 1,8-Octandiol, Neopentylglykol, 1,4-Bishydroxymethylcyclohexan, 2-Methyl-1,3-propandiol, 2,2,4-Trimethylpentandiol-1,3, Dipropylenglykol, Polypropylenglykole, Dibutylenglykol, Polybutylenglykole, Bisphenol A, Tetrabrombisphenol A, Glyzerin, Trimethylolpropan, 1,2,6-Hexantriol, 1,2,4-Butantriol, Trimethylolpropan, Pentaerythrit, Chinit, Mannit, Sorbit, Methylglykosid und 1,3,4,6-Dianhydrohexite. Auch die Hydroxy-funktionellen Polybutadiene, welche u.a. unter dem Handelsnamen "Poly-bd®" käuflich sind, können als Polyol-Komponente ebenso wie deren hydrierten Analoga dienen. Weiterhin kommen Hydroxy-funktionelle Polysulfide, welche unter dem Handelsnamen "Thiokol® NPS-282" vertrieben werden, sowie Hydroxy-funktionelle Polysiloxane in Frage.

Als erfindungsgemäß einsetzbare Polyamin-Komponente eignen sich insbesondere Hydrazin, Hydrazinhydrat und substituierte Hydrazine, wie N-Methylhydrazin, N,N'-Dimethylhydrazin, Säurehydrazide der Adipinsäure, Methyladipinsäure, Sebacinsäure, Hydracrylsäure, Terephthalsäure, Semicarbazidoalkylen-hydrazide, wie 13-Semicarbazidopropionsäurehydrazid, Semicarbazidoalkylen-carbazinester, wie z. B. 2-Semicarbazidoethyl-carbazinester und/ oder Aminosemicarbazid-Verbindungen, wie 13-Aminoethylsemicarbazidocarbonat.

Polyamine, z.B. solche, die unter dem Handelsnamen Jeffamine® (es handelt sich um Polyetherpolyamine) vertrieben werden, sind auch geeignet.

Als Polyol-Komponente und/oder Polyamin-Komponente kommen auch die als sogenannte Kettenverlänger bekannten Spezies in Frage, welche bei der Herstellung von Polyurethanen und Polyhamstoffen mit überschüssigen Isocyanatgruppen reagieren, normalerweise ein Molekulargewicht (Mn) von unter 400 aufweisen und häufig in Form von Polyolen, Aminopolyolen oder aliphatischen, cycloaliphatischen oder araliphatischen Polyaminen vorliegen.

Geeignete Kettenverlängerer sind beispielsweise:
- Alkandiole, wie Ethandiol, 1,2- und 1,3-Propandiol, 1,4- und 2,3-Butandiol, 1,5-Pentandiol, 1,3-Dimethylpropandiol, 1,6-Hexandiol, Neopentylglykol, Cyclohexandimethanol, 2-Methyl-1,3-propandiol, Hexylenglykol, 2,5-Dimethyl-2,5-hexanediol
- Etherdiole, wie Diethylendiglykol, Triethylenglykol oder Hydrochinondihydroxyethylether
- Hydroxybutylhydroxycapronsäureester, Hydroxyhexylhydroxybuttersäureester, Adipinsäurehydroxyethylester und Terephthalsäurebishydroxyethylester und
- Polyamine, wie Ethylendiamin, 1,2- und 1,3-Diaminopropan, 1,4-Diaminobutan, 1,6-Diaminohexan, Isomerengemisch von 2,2,4- und 2,4,4-Trimethylhexamethylendiamin, 2-Methyl-pentamethylendiamin, Diethylentriamin, 1,3- sowie 1,4-Xylylendiamin und 4,4- Diaminodicyclohexylmethan.

Schließlich soll erwähnt sein, dass die Polyol-Komponente und/oder Polyamin-Komponente Doppelbindungen enthalten können, welche z.B. aus langkettigen, aliphatischen Carbonsäuren oder Fettalkoholen resultieren können. Eine Funktionalisierung mit olefinischen Doppelbindungen ist z. B. auch durch den Einbau vinylischer oder allylischer Gruppen möglich. Diese können beispielsweise von ungesättigten Säuren wie Maleinsäureanhydrid, Acrylsäure oder Methacrylsäure sowie deren jeweiligen Estern stammen.

Als besonders bevorzugt im Sinne der Erfindung ist es, dass es sich bei der Polyol-Komponente und/oder Polyamin-Komponente um Polypropylendiol, Polypropylentriol, Polypropylenpolyol, Polyethylendiol, Polyethylentriol, Polyethylenpolyol, Polypropylendiamin, Polypropylentriamin, Polypropylenpolyamin, Poly-THF-diamin, Polybutadiendiol, Polyesterdiol, Polyestertriol, Polyesterpolyol, Polyesteretherdiol, Polyesterethertriol, Polyesteretherpolyol, besonders bevorzugt Polypropylendiol, Polypropylentriol, Poly-THF-diol, Polyhexandiolcarbamatdiol, Polycaprolactamdiol und Polycaprolactamtriol handelt. Weiterhin kann es sich auch um Mischungen der genannten Verbindungen handeln.

Bezüglich der enthaltenen Silylierungsmittel-Komponente eignen sich
1. primäre und/oder sekundäre Aminosilane; α oder γ Stellung
   z. B. H₂N-CH₂-Si(OR²)₃

   H₂N-(CH₂)₃-Si(OR²)₃

   R'NH-(CH₂)₃-Si(OR²)₃

   R'NH-CH₂-CHMe-CH₂-Si(OR²)₃

   wobei OR² unabhängig voneinander repräsentiert wird durch eine Alkoxygruppe, wobei R² eine Alkylgruppe mit ein bis 5 Kohlenstoffatomen darstellt, z.B. Methyl, Ethyl, iso-Propyl, n-Propyl, n-Butyl, iso-Butyl, sec.-Butyl und/oder OR² eine Phenoxygruppe, eine Naphtyloxygruppe, eine Phenoxygruppe, welche an der ortho-, metha- und/oder para-Position substituiert ist, mit einer C1-C20 Alkyl-, Alkylaryl-, Alkoxy-, Phenyl-, substituierten Phenyl-, Thioalkyl-, Nitro-, Halogen-, Nitril-, Carboxyalkyl-, Carboxyamid-, -NH₂ und/oder NHR-Gruppe, worin R eine lineare, verzweigte oder zyklische C1-C20 Alkylgruppe z.B. Methyl, Ethyl, Propyl (n, iso), Butyl (n, iso, sec) oder Cyclohexyl oder Phenyl darstellt wobei R' eine lineare, verzweigte oder zyklische C1-C20 Alkylgruppe z.B. Methyl, Ethyl, Propyl (n, iso), Butyl (n, iso, sec) oder Cyclohexyl oder Phenyl darstellt,
2. Isocyanatosilane, α oder γ Stellung
3. Produkte erhalten durch Michael Addition primärer Aminosilane in α- und γ-Stellung und Ringschluss zum Hydantoin, z.B. US 5364955.

Bezüglich der enthaltenen Silylierungsmittel-Komponente wird auf die Patentanmeldungen WO2006/088839 A2 und WO 2008/061651 A1 sowie die Patentschrift EP 1 685171 B1 Bezug genommen.

Die im silylierten Polyurethan bzw. dem silylierten Polyharnstoff enthaltenen Silylierungsmittel-Komponenten, welche im Sinne der vorliegenden Erfindung bevorzugt sind, sind insbesondere Silane der allgemeinen Formel:

Y-R¹-Si(Me)ₙ(OR²)₃₋ₙ

wobei Y repräsentiert wird durch -NCO, -NHR, -NH₂ oder -SH,
R repräsentiert wird durch eine Alkylgruppe oder Arylgruppe mit ein bis 20 Kohlenstoffatomen, z.B. Methyl-, Ethyl-, iso-Propyl-, n-Propyl, Butylgruppe (n-, iso-, sec-), Cyclohexyl, Phenyl und Naphthyl,
R¹ repräsentiert wird durch eine divalente Kohlenwasserstoffeinheit mit ein bis 10 Kohlenstoffatomen, z.B. Ethylen, Methylethylen,
Me repräsentiert wird durch Methyl,
OR² unabhängig voneinander repräsentiert wird durch eine Alkoxygruppe, wobei R² eine Alkylgruppe mit ein bis 5 Kohlenstoffatomen darstellt, z.B. Methyl, Ethyl, iso-Propyl, n-Propyl, n-Butyl, iso.Butyl, sec.-Butyl und/oder OR² eine Phenoxygruppe, eine Naphtyloxygruppe, eine Phenoxygruppe, welche an der ortho-, metha- und/oder para-Position substituiert ist, mit einer C1-C20 Alkyl-, Alkylaryl-, Alkoxy-, Phenyl-, substituierten Phenyl-, Thioalkyl-, Nitro-, Halogen-, Nitril-, Carboxyalkyl-, Carboxyamid-, -NH₂ und/oder NHR-Gruppe, worin R eine lineare, verzweigte oder zyklische C1-C20 Alkylgruppe, z.B. Methyl, Ethyl, Propyl (n-, iso.), Butyl (n-, iso-, sec.-) oder Phenyl darstellt und
n repräsentiert wird durch 0, 1, 2 oder 3.

Als Silylierungsmittel-Komponente können aber auch Mischungen aus mindestens zwei der genannten Verbindungen im Polymer vorhanden sein.

In einer bevorzugten Ausführungsform sind als Silylierungsmittel-Komponente insbesondere Aminogruppen oder Isocyanatgruppen enthaltende Alkoxysilane von Interesse. Als Aminogruppen enthaltende Alkoxysilane sind insbesondere Verbindungen geeignet, welche ausgewählt sind aus der Gruppe 3-Aminopropyl-trimethoxysilan, 3-Aminopropyl-triethoxysilan, 3-Aminopropyl-methyldimethoxysilan, 3-Aminopropyl-methyldiethoxysilan, 3-Amino-2-methylpropyl-trimethoxysilan, 4-Aminobutyl-trimethoxysilan, 4-Aminobutyl-methyldimethoxysilan, 4-Amino-3-methylbutyl-trimethoxysilan, 4-Amino-3,3-dimethylbutyl-trimethoxysilan, 4- Amino-3,3-dimethylbutyl-dimethoxymethylsilan, Aminomethyl-trimethoxysilan, Aminomethyl-dimethoxymethylsilan, Aminomethylmethoxydimethylsilan, Aminomethyltriethoxysilan, Aminomethyl-diethoxymethylsilan, Aminomethyl-ethoxydimethylsilan, N-Methyl-3-aminopropyl-trimethoxysilan, N-Methyl-3-aminopropyl-dimethoxymethylsilan, N-Ethyl-3-aminopropyl-trimethoxysilan, N-Ethyl-3-aminopropyldimethoxymethylsilan, N-Butyl-3- aminopropyl-trimethoxysilan, N-Butyl-3- aminopropyl-dimethoxymethylsilan, N-Cyclohexyl-3-aminopropyl-trimethoxysilan, N-Cyclohexylaminomethyltriethoxysilan, Cyclohexylaminomethyltrimethoxysilan, N-Phenyl-3-aminopropyl-trimethoxysilan, N-Methyl-3-amino-2-methylpropyl-tri- methoxysilan, N-Methyl-3-amino-2-methylpropyl-di-methoxymethylsilan, N-Ethyl-3-amino-2-methylpropyl-trimethoxysilan, N-Ethyl-3-amino-2-methylpropyl-dimethoxymethylsilan, N-Ethyl-3-aminopropyl-dimethoxy-methylsilan, N-Ethyl-3-aminopropyltrimethoxysilan, N-Phenyl-4-aminobutyl-trimethoxysilan, N- Phenyl-aminomethyl-dimethoxymethylsilan, N- Phenyl-aminomethyl-trimethoxysilan, N-Cyclohexyl-aminomethyl-di-methoxymethylsilan, N-Cyclohexyl-aminomethyl-tri-methoxysilan, N-Methyl-aminomethyl-dimethoxymethylsilan, N-Methyl-aminomethyl-trimethoicysilan, N-Ethyl-aminomethyl-dimethoxymethylsilan, N-Ethyl-aminomethyl-trimethoxysilan, N-Propyl-aminomethyl-dimethoxymethylsilan, N-Propyl-aminomethyl-trimethoxysilan, N-Butyl-aminomethyl-dimethoxymethylsilan, N-Butyl-aminomethyl-trimethoxysilan, N-(2-Aminoethyl)-3-amino-propyl-trimethoxysilan, N-(2-Aminoethyl)-3-aminopropyl-methyldimethoxysilan, 3-[2-(2-Aminoethylamino)-ethylamino]-propyltrimethoxysilan, Bis(trimethoxysilylpropyl)amin, Bis(dimethoxy(methyl)silylpropyl)-amin, Bis(trimethoxysilylmethyl)amin, Bis(dimethoxy(methyl)silylmethyl)amin, 3-Ureidopropyltrimethoxysilan, N-Methyl[3-(Trimethoxysilyl)-propyl]carbamate, N-Trimethoxysilylmethyl-O-methylcarbamat, N-Dimethoxy(methyl)silyl-methylcarbamat sowie deren Analoga mit Ethoxy- oder Isopropoxygruppen oder n-Propoxygruppen oder n-Butoxygruppen oder iso-Butoxygruppen oder sec.-Butoxygruppen anstelle der Methoxygruppen am Silicium.

Als Isocyanatgruppen enthaltende Alkoxysilane sind insbesondere Verbindungen geeignet, welche ausgewählt sind aus der Gruppe bestehend aus Isocyanatopropy-Itriethoxysilan, Isocyanatopropyltrimethoxysilan, Isocyanatopropylmethyldiethoxysilan, Isocyanatopropylmethyldimethoxysilan, Isocyanatomethyltrimethoxysilan, Isocyanatomethyltriethoxysilan, Isocyanatomethylmethyldiethoxysilan, Isocyanatomethylmethyldimethoxysilan, Isocyanatomethyldimethylmethoxysilan oder Isocyanatomethyldimethylethoxysilan, sowie deren Analoga mit Isopropoxy- oder n-Propoxygruppen.

Bezüglich der gemäß vorliegender Erfindung bevorzugt zu verwendenden silylierten Polyurethane und deren Herstellung wird weiterhin auf die Patentanmeldungen US 3,632,557, US 5,364,955, WO 01/16201, EP 931800, EP 1093482 B1, US 2004260037, US 2007167598, US 2005119421, US 4857623, EP 1245601, WO 2004/060953, DE 2307794 Bezug genommen.

Die erfindungsgemäß einsetzbaren silylierten Polyether sind aus mindestens einer Polyether-Komponente und mindestens einer Silylierungsmittel-Komponente aufgebaut. Seit einiger Zeit sind Baudichtstoffe auf dem Markt, welche sogenanntes MS-Polymer^{®} der Fa. Kaneka und/oder Excestar der Fa. Asahi Glass Chemical enthalten, wobei "MS" für "modified silicone" steht. Diese silyl-terminierten Polyether sind für die vorliegende Erfindung besonders geeignet. Es handelt sich dabei um Polymere, welche aus Polyetherketten mit Silanendgruppen bestehen, hergestellt durch die Hydrosilylierung von endständigen Doppelbindungen. Die Silanendgruppen bestehen aus einem an die Polyetherkette gebundenen Silizium, an welches zwei Alkoxygruppen und eine Alkylgruppe bzw. drei Alkoxygruppen gebunden sind. Durch die Reaktion mit Feuchtigkeit hydrolysieren die Alkoxygruppen zu Alkoholen, und die entstandenen Si-OH Gruppen kondensieren anschließend zu einem Si-O-Si Netzwerk.

Als Polyetherkomponente für die silyl-terminierten Polyether eignen sich unter anderem die unter Verwendung von Startermolekülen hergestellten Polyole aus Styroloxid, Propylenoxid, Butylenoxid, Tetrahydrofuran oder Epichlorhydrin. Insbesondere geeignet sind Polypropylenoxid, Polybutylenoxid, Polyethylenoxid und Tetrahydrofuran oder deren Mischungen. Hierbei sind insbesondere Molekulargewichte zwischen 500 und 100000 g/mol, besonders 3000 und 20000 g/mol bevorzugt.

Zur Einführung der Doppelbindungen wird der Polyether mit organischen Verbindungen enthaltend ein Halogenatom ausgewählt aus der Gruppe Chlor, Brom oder Jod sowie einer endständigen Doppelbindung umgesetzt. Insbesondere eignen sich hierfür Allylchloride, Allylbromide, Vinyl(chloromethyl)benzol, Allyl(chloromethyl)-benzol, Allyl(bromomethyl)benzol, Allyl(chloromethyl)ether, Allyl(chloro-methoxy)-benzol, Butenyl(chloromethyl)ether, 1,6-Vinyl(chloromethoxy)benzol, wobei insbesondere Allylchlorid bevorzugt eingesetzt wird.

Die so erhaltenen Polyether mit endständigen Doppelbindungen werden durch Hydrosilylierung zu den silyl-terminierten Polyethern umgesetzt. Als Hydrosilylierungsmittel eignen sich hierbei insbesondere Trichlorsilan, Methyldichlorsilan, Dimethylchlorosilan, Phenyldichlorosilan sowie Trimethoxysilan, Triethoxysilan, Methyldiethoxysilan, Methyldimethoxysilan und Phenyldimethoxysilan sowie Methyldiacetoxysilan, Phenyldiacetoxysilan, Bis(dimethylketoxymat)methylsilan und Bis(cyclohexylketoxymat)methylsilan. Hierbei sind insbesondere die Halosilane und Alkoxylsilane bevorzugt.

Weiterhin wird auf die Patentanmeldungen US 3,971,751, EP 0319896,

US 4618653, EP 0184829, EP 0265929, EP 1285946, EP 0918062, Adhesives and Sealants -Technology, Applications and Markets, David J. Drunn, ISBN 1-85957-365-7, Rapra Technology Limited, 2003 und Congress proceedings 27. April 2005 Stick 4th European Congress on Adhesive and Sealant Raw Materials, Innovative Raw Materials for Structural Adhesives, ISBN 3-87870-156-X, Vincentz Network, 2005 Bezug genommen.

Die bevorzugt erfindungsgemäß einsetzbaren silylierten Polysulfide sind aus mindestens einer Polysulfid-Komponente und mindestens einer Silylierungsmittel-Komponente aufgebaut und werden bevorzugt durch folgende vereinfachte Formel repräsentiert:

(CH₃)₃-Si-S-(C₂H₄OCH₂OC₂H₄Sₓ)ₙ-C₂H₄OCH₂OC₂H₄S-Si-(CH₃)₃

Diese bevorzugten silylierten Polysulfide werden nach folgendem Verfahren hergestellt:

(n+1) Cl-R-Cl + (n+1) Na₂Sₓ → HS-(R-Sₓ)ₙ-R-SH + (n+1) 2 NaCl

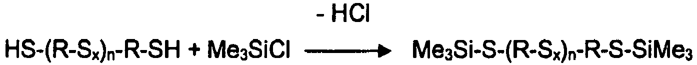

wobei R repräsentiert wird durch ein Alkylgruppe oder eine Ethergruppe.

Bezüglich der gemäß vorliegender Erfindung bevorzugt zu verwendenden silylierten Polysulfide wird auf die Veröffentlichungen "ALPIS Aliphatische Polysulfide", Hüthing u. Welpf Verlag, Basel, 1992, Heinz Lucke, ISBN 3-85739-1243 Bezug genommen.

Die erfindungsgemäß einsetzbaren silyl-terminierten Acrylate sind aus mindestens einer Acrylat-Komponente und mindestens einer Silyl-Komponente aufgebaut. Diese können beispielsweise aus der Umsetzung von alkenyl-terminierten Acrylaten durch Hydrosilylierung erhalten werden, wobei die alkenyl-terminierten Acrylate über Atom Transfer Radical Polymerization (ATRP) hergestellt werden können oder aus der Umsetzung von alkenyl-terminierten Acrylaten mit einem Silylgruppen enthaltenden Monomer, wobei die alkenyl-terminierten Acrylate über Atom Transfer Radical Polymerization (ATRP) hergestellt werden können.

Bei den Monomeren der Acrylat-Komponente handelt es sich bevorzugt um Ethyldiglycolacrylat, 4-tert. Butylcyclohexylacrylat, Dihydrocyclopentadienylacrylat, Lauryl(meth)acrylat, Phenoxyethylacrylat, Isobornyl(meth)acrylat, Dimethylaminoethylmethacrylat, Cyanoacrylate, Citraconat, Itaconat und deren Derivate, (Meth)acrylsäure, Methyl(meth)acrylat, Ethyl(meth)acrylat, n-Propyl(meth)acrylat, Isopropyl-(meth)acrylat, n-Butyl(meth)acrylat, Isobutyl(meth)acrylat, tert-Butyl(meth)acrylat, n-Pentyl(meth)acrylat, n-Hexyl(meth)acrylat, Cyclohexyl(meth)acrylat, n-Heptyl-(meth)acrylat, n-Octyl(meth)acrylat, 2-Ethylhexyl(meth)acrylat, Nonyl(meth)acrylat, Decyl(meth)acrylat, iso Decyl(meth)acrylat, Dodecyl(meth)acrylat, Phenyl(meth)-acrylat, Toluyl(meth)acrylat, Benzyl(meth)acrylat, 2-Methoxyethyl(meth)acrylat, 3-Methoxybutyl(meth)acrylat, 2-hydroxyethyl(meth)acrylat, 2-Hydroxypropyl(meth)-acrylat, Stearyl(meth)acrylat, Glycidyl(meth)acrylat, 2-Aminoethyl(meth)acrylate, γ-(Methacryloyloxypropyl)trimethoxysilan, Ethyleneoxid Addukte von (Meth)acrylsäure, Trifluoromethylmethyl(meth)acrylat, 2-Trifluoromethylethyl(meth)acrylat, 2-Perfluoroethylethyl(meth)acrylat, 2-Perfluoroethyl-2-pertluorobutyfethyl(meth)acrylat, 2-Pertluoroethyl(meth)acrylat, Perfluoromethyl(meth)acrylat, Diperfluoromethylmethyl(meth)acrylat, 2-Perfluoromethyl-2-perfluoroethylmethyl(meth)acrylat, 2-Perfluorohexylethyl(meth)acrylat, 2-Perfluorodecylethyl(meth)acrylat und 2-perfluorhexadecylethyl(meth)acrylat.

Wird die Silyl-Komponente durch Hydrosilylierung an das Acrylat-Komponente gebunden, so eignen sich als Silyl-Komponente insbesondere Trimethylchlorsilan, Dimethyldichlorsilan, Methyltrichlorsilan, Hexamethyldisilazan, Trichlorsilan, Methyldichlorsilan, Dimethylchlorosilan, Phenyldichlorosilan sowie Trimethoxysilan, Triethoxysilan, Methyldiethoxysilan, Methyldimethoxysilan und Phenyldimethoxysilan sowie Methyldiacetoxysilan, Phenyldiacetoxysilan, Bis(dimethylketoxymat)-methylsilan und Bis(cyclohexylketoxymat)methylsilan. Hierbei sind insbesondere die Halosilane und Alkoxylsilane bevorzugt.

Wird die Silyl-Komponente durch ein Silylgruppen enthaltendes Monomer an die Acrylt-Komponente gebunden, so eignen sich als Silyl-Komponente insbesondere 3-(Meth)acryloxypropyltrimethoxysilan, 3-(Meth)acryloxypropylmethyldimethoxysilan, 3-(Meth)acryloxypropyltriethoxysilan, 3-(Meth)acryloxypropylmethyldiethoxysilan, (Meth)acryloxymethyltrimethoxysilan, (Meth)acryloxymethyl-methyldimethoxysilan, (Meth)acryloxymethyltriethoxysilan, (Meth)acryloxymethyl-methyldiethoxysilan.

Die erfindungsgemäßen silyl-terminierten Acrylate besitzen ein gewichtsmittleres Molekulargewicht zwischen 500 und 200000 g/mol, besonders bevorzugt zwischen 5000 und 100000 g/mol.

Bezüglich der gemäß vorliegender Erfindung bevorzugt zu verwendenden silyl-terminierten Acrylate wird auf die Patentanmeldungen EP 1498433 und auf Chem. Rev. (2001),101,2921-2990 Atom Transfer Radical Polymerization, Krzysztof Matyjaszewski and Jianhui Xia und auf Progress in Polymer Science 32 (2007) 93-146 Controlled/living radical polymerization: Features, developments, and perspectives, Wade A. Braunecker, Krzysztof Matyjaszewski, Elsevier Bezug genommen.

Neben der Komponente (A) und (B) kann die erfindungsgemäße Zusammensetzung zusätzliche weitere Komponenten enthalten. Dies können unter anderem die folgenden Hilfs- und Zusatzstoffe sein:
- Haftvermittler bspw. Epoxysilane, Anhydridosilane, Addukte von Silanen mit primären Aminosilanen, Ureidosilane, Aminosilane, Diaminosilane, sowie deren Analoga als Monomer oder Oligomer und Harnstoffsilane; z.B. Dynasylan AMEO, Dynasylan AMMO, Dynasylan DAMO-T, Dynasylan 1146, Dynasylan 1189, Silquest A-Link 15
- Wasserfänger z. B. Vinyltriethoxysilan, Vinyltrimethoxysilan, α-funktionelle Silane wie N-(Silylmethyl)-O-methyl-carbamate, insbesondere N-(Methyldimethoxysilylmethyl)-O-methyl-carbamat, (Methacryloxymethyl)silane, Methoxymethylsilane, N-Phenyl-, N-Cyclohexyl- und N-Alkylsilane, Orthoameisensäureester, Calciumoxid oder Molekularsieb;
- Katalysatoren bspw. Metallkatalysatoren in Form von Organozinnverbindungen wie Dibutylzinndilaurat und Dibutylzinndiacetylacetonat, Bismut-organische Verbindungen oder Bismut-Komplexe; aminogruppenhaltige Verbindungen, bspw. 1,4-Diazabicyclo[2.2.2]-octan und 2,2'-Dimorpholinodiethylether, sowie Aminosilane. Als Metallkatalysatoren kommen weiterhin Titan-, Zirkon-, Bismut-, Zink- und Lithiumkatalysatoren sowie Metallcarboxylate in Frage, wobei auch Kombinationen verschiedener Metallkatalysatoren eingesetzt werden können sowie Kombinationen aus Aminosilanen und Metallkatalysatoren;
- Licht- und Alterungsschutzmittel, welche insbesondere als Stabilisatoren gegen Wärme, Licht und UV-Strahlung wirken;
- Flammschutzmittel;
- Biozide, wie bspw. Algizide, Fungizide oder das Pilzwachstum hemmende Substanzen;
- Füllstoffe, z. B. gemahlene oder gefällte Calciumcarbonate, welche ggf. mit Fettsäuren bzw. Fettsäurengemischen beschichtet sind, z.B. Stearate, insbesondere feinteiliges beschichtetes Calciumcarbonat, Ruße, insbesondere industriell hergestellte Ruße, Kaoline, Aluminiumoxide, Kieselsäuren, insbesondere hochdisperse Kieselsäure aus Pyrolyseprozessen, PVC-Pulver oder Hohlkugeln. Bevorzugte Füllstoffe sind Ruß, Calciumcarbonate, wie bspw. gefällte oder natürliche Kreidetypen wie Omyacarb^{®} der Fa. Omya, Ultra P-Flex^{®} der Fa. Specialty Minerals Inc, Socal^{®} U1S2, Socal^{®}312, Winnofil^{®} 312 der Fa. Solvay, Hakuenka^{®} der Fa. Shiraishi, hochdisperse Kieselsäuren aus Pyrolyseprozessen sowie Kombinationen aus diesen Füllstoffen. Ebenfalls geeignet sind Mineralien wie Kieselerde, Talk, Calciumsulfat (Gips) in Form von Anhydrit, Halbhydrat oder Dihydrat, Quarzmehl, Kieselgel, gefälltes oder natürliches Bariumsulfat, Titandioxid, Zeolithe, Leucit, Kalifeldspat, Biotit, die Gruppe der Soro-, Cyclo-, Ino-, Phyllo- und Hectosilicate, die Gruppe der schwerlöslichen Sulfate wie Gips, Anhydrit oder Schwerspat sowie Calciummineralien wie Calcit;
- Rheologie-Modifizierer, wie bspw. Verdickungsmittel, z. B. Harnstoffverbindungen, Polyamidwachse, Bentonite, pyrogene Kieselsäure und/oder Acrylate;
- Oberflächenaktive Substanzen wie bspw. Netzmittel, Verlaufsmittel, Entlüftungsmittel oder Entschäumer, Dispergiermittel;
- Fasern, bspw. aus Polyethylen oder Propylen;
- Pigmente, bspw. Titandioxid;
- Lösemittel
sowie weitere in feuchtigkeitshärtenden Zusammensetzungen eingesetzte Substanzen.

Der erfindungsgemäße Kleb- oder Dichtstoff enthält in einer Ausführungsform 10 bis 90 Gew.-% Komponente (A), 3 bis 50 Gew.-% Komponente (B), 0 bis 80 Gew.-% Füllstoffe, 0 bis 20 Gew.-% Wasserfänger und 0,5 bis 20 Gew.-% Rheologiemodifizierer. Als bevorzugt ist eine Menge von 25 bis 40 Gew.-% Komponente (A), 5 bis 40 Gew.-% Komponente (B), 30 bis 55 Gew.-% Füllstoffe, 1 bis 10 Gew.-% Wasserfänger und 1 bis 10 Gew.-% Rheologiemodifizierer anzusehen.

Zu unterscheiden sind Einkomponenten- (1K) und Zweikomponenten-Systeme (2K). 1 K-Systeme binden durch chemische Reaktionen des Bindemittels mit der Umgebungsfeuchtigkeit ab. 2K-Systeme können darüber hinaus durch chemische Reaktionen der vermischten Komponenten unter kontinuierlicher Verfestigung abbinden. Bevorzugt handelt es sich bei dem erfindungsgemäßen Kleb- und Dichtstoff um ein Einkomponenten-System. Es kann aber auch vorteilhaft sein, das erfindungsgemäße System als ein Zweikomponenten-System auszuführen. Hierbei enthält die eine Komponente die Polymerkomponente (A), während die zweite Komponente beispielsweise einen Katalysator oder mikronisiertes Wasser als Booster enthält, der die Aushärtung des Systems beschleunigt. Es ist vorteilhaft, darauf zu achten, dass die eingesetzten Komponenten in einem Einkomponenten-System die Lagerstabilität der Zusammensetzung nicht beeinträchtigen, d. h. dass sie während der Lagerung die zur Vernetzung führende Reaktion der in der Zusammensetzung enthaltenen Silangruppen nicht in signifikantem Ausmaß auslösen. Insbesondere bedeutet dies, dass solche weiteren Komponenten bevorzugt kein oder höchstens Spuren von Wasser enthalten. Es kann daher sinnvoll sein, gewisse Komponenten vor dem Einmischen in die Zusammensetzung chemisch oder physikalisch zu trocknen. Ist dies nicht möglich oder nicht gewünscht, kann es in diesen Fällen vorteilhaft sein, den Kleb- oder Dichtstoff als Zweikomponenten-System auszuführen, wobei die Komponente oder die Komponenten, welche die Lagerstabilität nachteilig beeinflussen, getrennt von Komponente (A) in die zweite Komponente formuliert werden.

Die efindungsgemäße Zusammensetzung wird unter Ausschluss von Feuchtigkeit aufbewahrt, sie ist lagerstabil, d. h. sie kann unter Ausschluss von Feuchtigkeit in einer geeigneten Verpackung oder Anordnung wie bspw. einem Fass, einem Beutel oder einer Kartusche über einen Zeitraum von mehreren Monaten bis zu einigen Jahren aufbewahrt werden, ohne dass sie sich in ihren Anwendungseigenschaften oder in ihren Eigenschaften nach der Aushärtung in einem für den Gebrauch relevanten Ausmaß verändert. Üblicherweise wird die Lagerstabilität über die Messung der Viskosität, der Auspressmenge oder der Auspresskraft ermittelt.

Ein weiterer Gegenstand der vorliegenden Erfindung ist die Verwendung des Kleb- oder Dichtstoffes zur Herstellung von stoffschlüssigen Verbindungen zwischen Fügeteilen. Bei der Applikation der erfindungsgemäßen Zusammensetzung auf mindestens ein Fügeteil kommt die Silangruppe des Polymers in Kontakt mit Feuchtigkeit. Die Silangruppen haben die Eigenschaft, bei Kontakt mit Feuchtigkeit zu hydrolysieren. Dabei bilden sich Organosilanole (siliciumorganische Verbindung enthaltend ein- oder mehrere Silanolgruppen, SiOH-Gruppen) und durch nachfolgende Kondensationsreaktionen Organosiloxane (siliciumorganische Verbindung enthaltend ein oder mehrere Siloxangruppen, Si-O-Si-Gruppen). Als Ergebnis dieser Reaktion, welche durch den Einsatz von Katalysatoren beschleunigt werden können, härtet die Zusammensetzung schließlich aus. Dieser Prozess wird auch als Vernetzung bezeichnet. Das für die Aushärtungsreaktion benötigte Wasser kann entweder aus der Luft stammen (Luftfeuchtigkeit) oder aber die Zusammensetzung kann mit einer Wasser enthaltenden Komponente in Kontakt gebracht werden, z. B. durch Bestreichen bspw. mit einem Abglättmittel oder durch Besprühen oder es kann der Zusammensetzung bei der Applikation eine Wasser enthaltende Komponente zugesetzt werden, z. B. in Form einer wasserhaltigen Paste, die bspw. über einen Statikmischer eingemischt wird.

Die beschriebene Zusammensetzung härtet, wie bereits ausgeführt, bei Kontakt mit Feuchtigkeit aus. Die Aushärtung erfolgt je nach Temperatur, Art des Kontaktes, der Menge der Feuchtigkeit und der Anwesenheit allfälliger Katalysatoren unterschiedlich schnell. Bei der Aushärtung mittels Luftfeuchtigkeit wird zunächst eine Haut an der Oberfläche der Zusammensetzung gebildet. Die sog. Hautzeitbildung stellt demnach ein Maß für die Aushärtungsgeschwindigkeit dar. Typischerweise ist eine derartige Hautbildungszeit von bis zu 2 Stunden bei 23°C und 50 %iger relativer Luftfeuchtigkeit erstrebenswert. Die erfindungsgemäße Zusammensetzung verfügt im ausgehärteten Zustand über eine hohe mechanische Festigkeit bei einer hohen Dehnbarkeit sowie über gute Haftungseigenschaften. Dadurch eignet sie sich für eine Vielzahl von Anwendungen, insbesondere als elastischer Klebstoff, als elastischer Dichtstoff oder als elastische Beschichtung. Insbesondere eignet sie sich für Anwendungen, welche eine schnelle Aushärtung erfordern und hohe Anforderungen an die Dehnbarkeit stellen bei gleichzeitig hohen Anforderungen an die Haftungseigenschaften und die Festigkeiten.

Geeignete Anwendungen sind bspw. die stoffschlüssigen Verbindungen zwischen Fügeteilen aus Beton, Mörtel, Glas, Metall, Keramik, Kunststoff und/oder Holz. In einer besonderen Ausführungsform handelt es sich bei den Fügeteilen zum einen um eine Oberfläche und zum anderen um einen Teppichbelag, einen PVC-Belag, ein Laminat, einen Gummibelag, einen Korkbelag, einen Linoleumbelag, einen Holzbelag, z.B. Parkett, Dielen, Schiffsboden oder Fliesen. Insbesondere kann die erfindungsgemäße Zusammensetzung auch für die Fertigung oder Reparatur von industriellen Gütern oder Konsumgütern eingesetzt werden, weiterhin für das Abdichten oder Verkleben von Bauteilen im Hoch- oder Tiefbau sowie insbesondere im Sanitärbereich. Im speziellen kann es sich bei den Fügeteilen um Teile im Auto-, Trailer-, LKW-, Wohnwagen-, Zug-, Flugzeug-, Schiff- und Gleisbau handeln.

Ein Klebstoff für elastische Verklebungen in diesem Bereich wird bevorzugt in Form einer Raupe in einer im Wesentlichen runden oder dreieckigen Querschnittsfläche aufgetragen. Elastische Verklebungen im Fahrzeugbau sind bspw. das Ankleben von Teilen wie Kunststoffabdeckungen, Zierleisten, Flansche, Stossstangen, Führerkabinen oder andere Anbauteile an die lackierte Karosserie eines Transportmittels oder das Einkleben von Scheiben in die Karosserie.

Ein bevorzugter Anwendungsbereich im Hoch- und Tiefbau sind Hochbaufugen, Bodenfugen, Dehnfugen oder Dichtfugen im Sanitärbereich. In einer bevorzugten Ausführungsform wird die beschriebene Zusammensetzung als elastischer Kleb- oder Dichtstoff eingesetzt. Als elastischer Klebstoff weist die Zusammensetzung typischerweise eine Bruchdehnung von mindestens 50 % und als elastischer Dichtstoff von mindestens 300 % bei Raumtemperatur auf.

Für eine Anwendung der Zusammensetzung als Dichtstoff für bspw. Fugen im Hoch- oder Tiefbau oder für eine Anwendung als Klebstoff für elastische Verklebungen bspw. im Fahrzeugbau weist die Zusammensetzung vorzugsweise eine pastöse Konsistenz mit strukturviskosen Eigenschaften auf. Ein solcher pastöser Dichtstoff oder Klebstoff wird mittels einer geeigneten Vorrichtung auf das Fügeteil aufgetragen. Geeignete Methoden zum Auftragen sind bspw. die Applikation aus handelsüblichen Kartuschen, welche manuell oder mittels Druckluft betrieben werden oder aus einem Fass oder Hobbock mittels einer Förderpumpe oder einer Exzenterschneckenpumpe, ggf. mittels eines Applikationsroboters.

Die Fügeteile können bei Bedarf vor dem Applizieren des Kleb- oder Dichtstoffes vorbehandelt werden. Derartige Vorbehandlungen umfassen insbesondere physikalische und/oder chemische Reinigungsverfahren bspw. Schleifen, Sandstrahlen, Bürsten oder dgl. oder Behandeln mit Reinigern oder Lösemitteln oder das Aufbringen eines Haftvermittlers, einer Haftvermittlerlösung oder eines Primers.

Bei der Anwendung als Klebstoff wird die erfindungsgemäße Zusammensetzung entweder auf das eine oder das andere Fügeteil oder auf beide Fügeteile appliziert. Danach werden die zu klebenden Teile gefügt, worauf der Klebstoff durch Kontakt mit Feuchtigkeit aushärtet. Es ist jeweils darauf zu achten, dass das Fügen der Teile innerhalb der sog. Offenzeit erfolgt, um zu gewährleisten, dass die beiden Fügeteile verlässlich miteinander verklebt werden.

Ein weiterer Gegenstand der vorliegenden Erfindung ist ein Verfahren zur Herstellung eines Kleb- oder Dichtstoffes, wobei a) Komponente (B) und optional mindestens eine Verbindung aus der Reihe Füllstoff, Thixotropiermittel, Antioxidans und UV-Absorber vorgelegt wird, b) die Mischung ggf. bei einer Temperatur von über 60°C im Vakuum auf < 5000 ppm Wasser getrocknet wird, c) optional mindestens eine Verbindung aus der Reihe Wasserfänger und Haftvermittler und, d) Komponente (A) zugesetzt wird, wobei die Komponenten homogen gemischt werden.

In einer bevorzugten Ausführungsform werden die unter a) vorgelegten Komponenten bei einer Temperatur von über 100°C, besonders bevorzugt über 130°C, im Vakuum getrocknet. Insbesondere ist ein Vakuum von unter 100 mmHg, insbesondere unter 10 mmHg, als bevorzugt anzusehen. Der Wassergehalt nach dem Trocknen sollte möglichst niedrig sein, bevorzugt sollte dieser unter 2.000 ppm, insbesondere unter 800 ppm, betragen. Der Wassergehalt wird nach der Methode von Karl Fischer bestimmt.

Für das erfindungsgemäße Herstellverfahren ist es als bevorzugt anzusehen, dass die eingesetzten Komponenten während des gesamten Prozesses, ggf. auch während der Trocknung, miteinander gemischt bzw. in Bewegung gehalten werden. Alternativ können die eingesetzten Komponenten auch erst am Ende des Herstellverfahrens homogen miteinander gemischt werden. Als Mischeinrichtungen eignen sich alle dem Fachmann hierfür bekannten Vorrichtungen, insbesondere kann es sich um einen statischen Mischer, Planetenmischer, horizontalen Turbulentmischer (Fa. Drais), Planetendissolver bzw. Dissolver (Fa. PC Laborsysteme), Intensivmischer und/oder Extruder handeln.

Das erfindungsgemäße Verfahren zur Herstellung des Kleb- oder Dichtstoffes kann diskontinuierlich bspw. in einem Planetenmischer durchgeführt werden. Es ist aber auch möglich, das Verfahren kontinuierlich zu betreiben, wobei sich hierfür insbesondere Extruder als geeignet erwiesen haben. Hierbei wird das Bindemittel in den Extruder gegeben und flüssige sowie feste Zuschlagsstoffe zudosiert.

Insgesamt werden mit den vorgeschlagenen Kleb- und Dichtstoffen enthaltend Cyclohexanpolycarbonsäure-Derivate Zusammensetzungen zur Verfügung gestellt, welche sich durch eine erhöhte Dehnbarkeit bei gleichzeitig hoher Reaktivität und guten Haftungseigenschaften auszeichnen. Cyclohexanpolycarbonsäure-Derivate sind im industriellen Maßstab kostengünstig verfügbar. Durch die Bereitstellung der efindungsgemäßen Kleb- und Dichtstoffe konnte somit die gestellt Aufgabe in vollem Umfang gelöst werden.

Die Erfindung wird anhand der folgenden, nicht einschränkenden Beispiele näher erläutert.

### Beispiele

### Allgemeine Herstellvorschrift

Weichmacher, Socal U1S2, Omyalite 90 T, Tronox 435 und Dynasylan VTMO werden vorgelegt und bei einer Temp. von 60°C im Vakuum miteinander vermischt. Im Anschluss werden Bindemittel und Aerosil R 202 zugegeben. Im letzten Schritt werden Dynasylan AMMO und Metatin 740 zugefügt und gemischt. Der Dichtstoff wird in Aluminium- oder Kunststoffkartuschen abgefüllt.

### Beispiel 1

| | DIUP | Hexamoll^{®} DINCH | Gew.-% |
|---|---|---|---|
| Weichmacher | 120,00 | 120,00 | 15,00 |
| Socal U1S2 | 308,40 | 308,40 | 41,45 |
| Bindemittel | 240,00 | 240,00 | 30,00 |
| Aerosil R 202 | 16,00 | 16,00 | 2,00 |
| Tronox 435 | 32,00 | 32,00 | 4,00 |
| Omyalite 90 T | 40,00 | 40,00 | 5,00 |
| Dynasylan VTMO | 16,00 | 16,00 | 2,00 |
| Dynasylan AMMO | 4,00 | 4,00 | 0,50 |
| Metatin 740 | 0,40 | 0,40 | 0,05 |
| | | | |
| Gesamt | 800,00 | 800,00 | 100,00 |

Die Zahlenangaben in Spalte zwei und drei beziehen sich auf Gewichtsteile.

### Beispiel 2

| | DIUP | Hexamoll^{®} DINCH | % |
|---|---|---|---|
| Weichmacher | 180,00 | 180,00 | 22,50 |
| Socal U1S2 (getrocknet) | 308,40 | 308,40 | 42,45 |
| Bindemittel | 180,00 | 180,00 | 22,50 |
| Aerosil R 202 | 16,00 | 16,00 | 2,00 |
| Tronox 435 (getrocknet) | 32,00 | 32,00 | 4,00 |
| Omyalite 90 T (getrocknet) | 40,00 | 40,00 | 5, 00 |
| Dynasylan VTMO | 16,00 | 16,00 | 2,00 |
| Dynasylan AMMO | 4,00 | 4,00 | 0,50 |
| Metatin 740 | 0,40 | 0,40 | 0,05 |
| | | | |
| Gesamt | 800,00 | 800,00 | 100,00 |

Die Zahlenangaben in Spalte zwei und drei beziehen sich auf Gewichtsteile. getrocknet: < 5000 ppm Wasser

| | |
|---|---|
| DIUP: | Diisoundecylphthalat |
| Hexamoll^{®} DINCH: | Diisononylcyclohexan-1,2-dicarboxylat der BASF SE |
| Bindemittel Beispiel 1: | Desmoseal® S XP 2636 (silanterminiertes Polyurethan-Prepolymer) der Bayer MaterialScience AG |
| Bindemittel Beispiel 2: | Geniosil® STP-E35 (Trimethoxysilylpropylcarbamateterminierter Polyether, CAS Nr.: 216597-12-5) der Wacker Chemie AG |
| Socal U1S2: | Fällungskreide ultrafein gecoatet der Solvay S.A. |
| Tronox 435: | Titandioxid der Tronox Pigments GmbH |
| Omyalite 90 T: | Hochreines oberflächenbehandeltes Calciumcarbonat der Omya Inc. |
| Dynasylan VTMO: | Vinyltrimethoxysilan der Evonik Degussa GmbH |
| Dynasylan AMMO: | 3-Aminopropyltrimethoxysilan der Evonik Degussa GmbH |
| Metatin 740: | Dibutylzinnketonat der Acima AG |

### Ergebnisse

### Beispiel 1

| | DIUP | Hexamoll® DINCH |
|---|---|---|
| Zugfestigkeit nach 7 Tagen Lagerung bei 20°C: | | |
| Dehnung % | 360,87 | 420,82 |
| Zugfestigkeit N/mm² | 2,19 | 1,99 |
| Kraft-100% N/mm² | 1,00 | 0, 85 |
| Hautbildezeit in Minuten : | 59,19 | 55,11 |
| | | |
| Tack bei 23°C und 50% Luftfeuchte: | | |
| nach 1 Tag | 2 | 2 |
| nach 3 Tagen | 1-2 | 1-2 |
| nach 7 Tagen | 1 | 1 |
| | | |
| Shore-A-Härte nach 14 Tagen Lagerung bei 20°C: | 36,0 | 38,3 |
| | | |
| Hautbildezeit in Minuten; 30 cm pro Std.: | | |
| Nullpunkt | 0 | 0 |
| 1. Messpunkt | 13,5 cm = 27 Min | 16 cm = 32 Min |
| 2. Messpunkt | 31 cm = 62 Min | 35 cm = 70 Min |
| verbliebenen Zeit bis Beginn in Min. | 6,13 | 3, 33 |

### Beispiel 2

| | DIUP | Hexamoll^{®} DINCH |
|---|---|---|
| Zugfestigkeit nach 7 Tagen Lagerung bei 20°C: | | |
| Dehnung % | 315,37 | 369,69 |
| Zugfestigkeit N/mm² | 1,89 | 1,34 |
| Kraft-100% N/mm² | 0, 82 | 0,59 |
| Hautbildezeit in Minuten : | 57, 38 | 106, 32 |
| | | |
| Tack bei 23°C und 50% Luftfeuchte: | | |
| nach 1 Tag | - | 1 |
| nach 3 Tagen | 3 | 1 |
| nach 7 Tagen | 1-2 | 1 |
| | | |
| Shore-A-Härte nach 14 Tagen Lagerung bei 20°C: | 36,0 | 38,3 |
| | | |
| Hautbildezeit in Minuten Stufe 5; 30 cm pro Std.: | | |
| Nullpunkt | 0 | 0 |
| 1. Messpunkt | 13,5cm = 27 Min | 16 cm = 32 Min |
| 2. Messpunkt | 31cm = 62 Min | 35 cm = 70 Min |
| verbliebenen Zeit bis Beginn in Min | 6,13 | 3,33 |

Wie den Beispielen zu entnehmen ist, kann durch die Zugabe von Hexamoll^{®} DINCH die Dehnung gegenüber der Verwendung von herkömmlichen Phthalaten wie z.B. DIUP im Kleb- und Dichtstoff erhöht werden.

## Patentansprüche

1. Kleb- oder Dichtstoff enthaltend mindestens
(A) eine Verbindung ausgewählt aus der Gruppe der silylierten Polyurethane, silylierten Polyharnstoffe, silylierten Polyether, silylierten Polysulfide und silyl-terminierten Acrylate und mindestens
(B) einen Cyclohexan-1,2-dicarbonsäuredi(isononyl)ester.

2. Kleb- oder Dichtstoff nach Anspruch 1, **dadurch gekennzeichnet, dass** dieser mindestens folgende Komponenten enthält
10 bis 90 % Komponente (A)
3 bis 50 % Komponente (B)
0 bis 80 % Füllstoffe
0 bis 20 % Wasserfänger
0 bis 10 % Rheologiemodifizierer.

3. Kleb- oder Dichtstoff nach einem der Ansprüche 1 oder 2, **dadurch gekennzeichnet, dass** als weitere Komponenten Hilfs- und Zusatzstoffe, Dispergiermittel, Pigmente, Rheotogiehilfsmittel, Wasserfänger, Haftvermittler, Katalysatoren, Licht- und Alterungsschutzmittel, Flammschutzmittel und/oder Biozide enthalten sind.

4. Kleb- oder Dichtstoff nach einem der Ansprüche 1 bis 3, **dadurch gekennzeichnet, dass** es sich um ein Einkomponentensystem handelt.

5. Kleb- oder Dichtstoff nach einem der Ansprüche 1 bis 3, **dadurch gekennzeichnet, dass** es sich um ein Zweikomponentensystem handelt.

6. Verfahren zur Herstellung eines Kleb- oder Dichtstoffes nach einem der Ansprüche 1 bis 5, **dadurch gekennzeichnet, dass**
a) Komponente (B) und optional mindestens eine Verbindung aus der Reihe Füllstoff, Thixotropiermittel, Antioxidans und UV-Absorber vorgelegt wird,
b) die Mischung ggf. bei einer Temperatur von über 60°C im Vakuum auf < 5000 ppm Wasser getrocknet wird,
c) optional mindestens eine Verbindung aus der Reihe wasserfänger und Haftvermittler und,
d) Komponente (A) zugesetzt wird,
wobei die Komponenten homogen gemischt werden.

7. Verfahren zur Herstellung eines Kleb- oder Dichtstoffes nach Anspruch 6, **dadurch gekennzeichnet, dass** das Verfahren diskonrinuierlich durchgeführt wird.

8. Verfahren zur Herstellung eines Kleb- oder Dichtstoffes nach Anspruch 6, **dadurch gekennzeichnet, dass** das Verfahren kontinuierlich durchgeführt wird.

9. Verwendung des Kleb- oder Dichtstoffes nach einem der Ansprüche 1 bis 5, zur Herstellung von stoffschlüssigen Verbindungen zwischen Fügeteilen.

10. Verwendung des Kleb- oder Dichtstoffes nach Anspruch 9, zur Herstellung von stoffschlüssigen Verbindungen zwischen fügeteilen aus Beton, Mörtel, Glas, Metall, Keramik, Kunststoff und/oder Holz.

11. Verwendung des Kleb- oder Dichtstoffes nach einem der Ansprüche 9 oder 10, **dadurch gekennzeichnet, dass** es sich bei den Fügeteilen zum einen um eine Oberfläche und zum anderen um einen Teppich-Belag, einen PVC-Belag, ein Laminat, einen Gummi-Belag, einen Kork-Belag, einen Linoleum-Belag, einen Holz-Belag oder Fließen handelt.

12. Verwendung des Kleb- oder Dichtstoffes nach einem der Ansprüche 9 oder 10, **dadurch gekennzeichnet, dass** es sich bei der stoffschlüssigen Verbindung um eine Hochbaufuge, eine Dehnfuge, eine Bodenfuge, Fassadenfuge, Gebäudetrennfugen, Anschlussfugen, Verglasung , Fensterverglasung, Structural Glazing, Dachverglasung, Fensterversiegelung oder eine Dichtfuge im Sanitärbereich handelt.

13. Verwendung des Kleb- oder Dichtstoffes nach einem der Ansprüche 9 oder 10, **dadurch gekennzeichnet, dass** es sich bei den Fügeteilen um Teile im Auto-, LKW-, Wohnwagen-, Zug-, Trailer-, Flugzeug-, Schiff-, und Gleisbau handelt.

## Claims

1. An adhesive or sealant comprising at least (A) one compound selected from the group consisting of silylated polyurethanes, silylated polyureas, silylated polyethers, silylated polysulfides and silyl-terminated acrylates, and at least (B) one cyclohexane-1,2-dicarboxylic acid di(isononyl) ester.

2. The adhesive or sealant according to claim 1, which comprises at least the following components: 10 to 90% of component (A)
3 to 50% of component (B)
0 to 80% of fillers
0 to 20% of water scavengers,
0 to 10% of rheology modifiers.

3. The adhesive or sealant according to either of claims 1 and 2, which comprises, as further components, auxiliaries and additives, dispersants, pigments, rheological assistants, water scavengers, adhesion promoters, catalysts, light stabilizers, aging inhibitors, flame retardants and/or biocides.

4. The adhesive or sealant according to any of claims 1 to 3, which is a one-component system.

5. The adhesive or sealant according to any of claims 1 to 3, which is a two-component system.

6. A process for preparing an adhesive or sealant according to any of claims 1 to 5, wherein
a) component (B) and optionally at least one compound from the series consisting of filler, thixotropic agent, antioxidant and UV absorber is introduced,
b) the mixture is dried optionally at a temperature of more than 60°C under reduced pressure to < 5000 ppm of water,
c) optionally at least one compound from the series consisting of water scavengers and adhesion promoters, and
d) component (A) is added,
the components being mixed homogeneously.

7. The process for preparing an adhesive or sealant according to claim 6, wherein the process is carried out discontinuously.

8. The process for preparing an adhesive or sealant according to claim 6, wherein the process is carried out continuously.

9. The use of the adhesive or sealant according to any of claims 1 to 5 for producing material bonds between parts to be joined.

10. The use of the adhesive or sealant according to claim 9 for producing material bonds between parts to be joined made of concrete, mortar, glass, metal, ceramic, plastic and/or wood.

11. The use of the adhesive or sealant according to either of claims 9 and 10, wherein one of the parts to be joined is a surface and the other is a carpet covering, a PVC covering, a laminate, a rubber covering, a cork covering, a linoleum covering, a wood covering or tiles.

12. The use of the adhesive or sealant according to either of claims 9 and 10, wherein the material bond is a construction joint, an expansion joint, a flooring joint, a facade joint, building partition joints, flashing joints, glazing, window glazing, structural glazing, roof glazing, window sealing or a sealed joint in the sanitary sector.

13. The use of the adhesive or sealant according to either of claims 9 and 10, wherein the parts to be joined are parts in auto, lorry, caravan, train, trailer, aircraft, watercraft and railway construction

## Revendications

1. Adhésif ou matériau d'étanchéité, contenant au moins
(A) un composé choisi dans le groupe des polyuréthanes silylés, des polyurées silylées, des polyéthers silylés, des polysulfures silylés et des acrylates terminés par silyle et au moins
(B) un ester isononylique de l'acide cyclohexane-1,2-dicarboxylique.

2. Adhésif ou matériau d'étanchéité selon la revendication 1, **caractérisé en ce qu'**il contient au moins les composants suivantes :
10 à 90% en poids de composant (A)
3 à 50% en poids de composant (B)
0 à 80% en poids de charges
0 à 20% en poids de piège d'eau,
0 à 10% d'agent de modification de la rhéologie.

3. Adhésif ou matériau d'étanchéité selon au moins l'une quelconque des revendications 1 ou 2, **caractérisé en ce qu'**il contient, comme autres composants, des adjuvants et des additifs, des dispersants, des pigments, des adjuvants de rhéologie, des pièges d'eau, des promoteurs d'adhérence, des catalyseurs, des agents de protection contre la lumière et le vieillissement, des agents ignifuges et/ou des biocides.

4. Adhésif ou matériau d'étanchéité selon au moins l'une quelconque des revendications 1 à 3, **caractérisé en ce qu'**il s'agit d'un système à un composant.

5. Adhésif ou matériau d'étanchéité selon au moins l'une quelconque des revendications 1 à 3, **caractérisé en ce qu'**il s'agit d'un système à deux composants.

6. Procédé pour la préparation d'un adhésif ou d'un matériau d'étanchéité selon l'une quelconque des revendications 1 à 5, **caractérisé en ce que**
a) on dispose au préalable le composant (B) et éventuellement au moins un composé de la série charge, agent thixotropique, antioxydant et absorbant des UV,
b) on sèche le mélange le cas échéant à une température supérieure à 60°C sous vide à < 5000 ppm d'eau,
c) on ajoute éventuellement au moins un composé de la série piège d'eau et promoteur d'adhérence et
d) on ajoute le composant (A),
les composants étant mélangés de manière homogène.

7. Procédé pour la préparation d'un adhésif ou d'un matériau d'étanchéité selon la revendication 6, **caractérisé en ce que** le procédé est réalisé de manière discontinue.

8. Procédé pour la préparation d'un adhésif ou d'un matériau d'étanchéité selon la revendication 6, **caractérisé en ce que** le procédé est réalisé en continu.

9. Utilisation de l'adhésif ou du matériau d'étanchéité selon l'une quelconque des revendications 1 à 5, pour la réalisation d'assemblages par liaison de matière entre des pièces à assembler.

10. Utilisation de l'adhésif ou du matériau d'étanchéité selon la revendication 9, pour la réalisation d'assemblages par liaison de matière entre des pièces à assembler en béton, en mortier, en verre, en métal, en céramique, en matériau synthétique et/ou en bois.

11. Utilisation de l'adhésif ou du matériau d'étanchéité selon l'une quelconque des revendications 9 ou 10, **caractérisée en ce qu'**il s'agit, pour les pièces à assembler, d'une part d'une surface et d'autre part d'un revêtement en tapis, en PVC, d'un stratifié, d'un revêtement en caoutchouc, d'un revêtement en liège, en linoléum, en bois ou de carreaux.

12. Utilisation de l'adhésif ou du matériau d'étanchéité selon l'une quelconque des revendications 9 ou 10, **caractérisée en ce qu'**il s'agit, pour l'assemblage par liaison de matière, d'un joint de construction haute, d'un joint de dilatation, d'un joint de sol, d'un joint de façade, d'un joint de séparation de bâtiments, de joints de raccordement, d'un vitrage, d'un panneau de hublot, de verre structurel, de vitrages de toit, d'un scellage de fenêtre ou d'un joint d'étanchéité dans le domaine sanitaire.

13. Utilisation de l'adhésif ou du matériau d'étanchéité selon l'une quelconque des revendications 9 ou 10, **caractérisée en ce qu'**il s'agit, pour les pièces à assembler, de pièces dans la construction de voitures, de camions, de motor-homes, de trains, de remorques, d'avions, de bateaux et de voies de chemin de fer.
